Europäisches Patentamt

European Patent Office

Office européen des brevets

(19)

(11) Veröffentlichungsnummer: **0 076 403**
**B1**

(12) # EUROPÄISCHE PATENTSCHRIFT

(45) Veröffentlichungstag der Patentschrift:
14.05.86

(51) Int. Cl.⁴: **H 01 R 39/40**

(21) Anmeldenummer: **82108561.0**

(22) Anmeldetag: **16.09.82**

(54) Geräuscharmer Bürstenhalter für einen Kommutator-Kleinmotor.

(30) Priorität: 30.09.81 DE 8128614 U

(43) Veröffentlichungstag der Anmeldung:
13.04.83 Patentblatt 83/15

(45) Bekanntmachung des Hinweises auf die Patenterteilung:
14.05.86 Patentblatt 86/20

(84) Benannte Vertragsstaaten:
AT BE CH DE FR GB IT LI NL SE

(56) Entgegenhaltungen:
DE - A - 3 022 991
FR - A - 2 039 545
FR - A - 2 154 731
US - A - 1 469 720
US - A - 2 802 960
US - A - 2 836 745

(73) Patentinhaber: Siemens Aktiengesellschaft, Berlin und München Wittelsbacherplatz 2, D-8000 München 2 (DE)

(72) Erfinder: Bormann, Jürgen, Estenfelder Strasse 29, D-8702 Rottendorf (DE)

## Beschreibung

Die Erfindung bezieht sich auf einen geräuscharmen Kasten-Bürstenhalter für einen in beiden Drehrichtungen arbeitenden Kommutator-Kleinmotor gemäss Oberbegriff des Patentanspruchs 1; ein derartiger Bürstenhalter ist aus der DE-A-2 460 959 bekannt.

Zur geführten Halterung der Bürste in beiden Drehrichtungen des Kommutators ist bei dem bekannten Bürstenhalter gemäss der DE-A-2 460 959 einerseits zwischen jeder Seitenfläche der Bürste und der in Abstand dazu gegenüberliegenden Seitenwand der Bürstenhülse je eine Blattfeder eingeklemmt und andererseits die Kohlebürste fussseitig durch eine Passöffnung der Bürstenhülse herausgeführt; zum Andruck der Kohlebürste an die Oberfläche des Kommutators dient eine dritte, innerhalb der Bürstenhülse angeordnete, allein radial in Richtung der Normalen auf die Oberfläche des Kommutators und senkrecht auf die Kopffläche der Kohlebürste drückende Schraubendruckfeder. Zur Geräuschentkoppelung zwischen der Kohlebürste bzw. der Bürstenhülse und dem resonanzgebenden Lagerschild, an dem die die Bürstenhülse aufnehmende Bürstentragplatte befestigt ist, dient ein die Bürstenhülse allseitig umschliessender Schlauch aus Silikon-Kautschuk.

Aufgabe der vorliegenden Erfindung ist es, den Fertigungs- und Montageaufwand für einen derartigen Bürstenhalter mit in ihrem Bürstenhülsen mit Spiel geführten Kohlebürsten wesentlich zu mindern und trotzdem eine hohe Geräuscharmut bei reversierendem Betrieb zu gewährleisten.

Diese Aufgabe wird bei einem Bürstenhalter der eingangs genannten Art erfindungsgemäss durch die kennzeichnende Lehre des Schutzanspruchs 1 gelöst.

Vorteilhafte Ausgestaltungen der Erfindung sind Gegenstand der Unteransprüche.

Aus der US-A-2 836 745 ist zwar ein Kasten-Bürstenhalter bekannt, bei dem die Bürstenhülse in einem von der Normalen auf die Oberfläche des Kommutators abweichenden Anstellwinkel angeordnet und die Kohlebürste unter den Druck nur einen einzigen, mit ihrem freien Schenkel auf einer Kopfschräge der Kohlebürsten aufliegenden Schenkelfeder gestellt sind, jedoch dienen diese Massnahmen einzig und allein dazu, einen trotz zunehmender Bürstenabnutzung konstanten Bürstenandruck auf den Kommutator zu gewährleisten.

Durch die FR-A-2 154 731 ist es lediglich be-kannt, bei einem Hammerbürstenhalter Motorvi-brationen von den Bürstenarmen dadurch fernzuhalten, dass zwischen den im Motorlagerschild fest verankerten einen Enden der Bürstenarme unterhalb ihrer eigentlichen Befestigung zusätzlich ein Vibrationsübertragungen hemmendes Bauteil zwischen Bürstenarm und Lagerschild vorzusehen.

Durch die in bestimmter Weise vorgesehene Schrägstellung der Bürstenführung relativ zur Normalen auf die Oberfläche des Kommutators im Berührungspunkt zwischen der Kohlebürste und der Oberfläche enthält die einzige, an sich nur dem Andruck der Kohlebürste auf die Ober-fläche des Kommutators dienende Schenkelfe-der auch eine Kraftkomponente in tangentialer Richtung; die aus der Reibung zwischen der Kohlebürste und dem Kommutator im Betrieb resul-tierende tangentiale Reibungskraft liegt, abhän-gig von der Drehrichtung des Kommutators, entweder in Richtung oder in Gegenrichtung zu die-ser tangentialen Kraftkomponente der Andruck-feder.

Durch die erfindungsgemässe vorgesehene Wahl der Grösse des Anstellwinkels der Bürstenführung wird nun auf einfache Weise erreicht, dass die von der Schenkelfeder abgeleitete tangentiale Kraftkomponente auf jeden Fall – d.h. auch bei entgegengesetzter Richtung von Rei-bungskraft einerseits und tangentialer Kraftkom-ponente der Andruckfeder andererseits – grösser ist als die aus der Bürstenreibung sich ergebende tangentiale Reibungskraft. Damit ist zusammen mit der an der Kohlebürste sich aufgrund der Kopfschräge ergebenen Tangential-Kraft die Lage der Bürste in der Bürstenhülse trotz eines notwendigerweise vorzusehenden Spiels zwischen Kohlebürste und Bürstenhülse in jedem Augenblick gleichbleibend abstandskonstant zu den Seitenwänden der Bürstenhülse, da die Kohlebürste durch die jeweiligen kopf- und fusssseiti-gen Tangential-Kräfte in der gleichen Richtung gegen die eine Seitenwand gedrückt wird. Auf diese Art und Weise wird mit einfachen Mitteln eine instabile Bürstenlage und damit die Zerstörung eines einmal eingeschliffenen Tragbildes der Kohlebürste verhindert, was ansonsten zu er-höhtem Bürstenverschleiss und verstärkter Ge-räuschbildung führen würde.

Trotzdem, insbesondere aufgrund radial schwingender Bürsten, entstehende Geräusche können erfindungsgemäss durch die zwischen Bürstenhülse und Bürstentragplatte auf fertigungs- und montagetechnisch einfache Weise zwischenlegbare Dämpfungsplatte vom resonanzgebenden Lagerschild ferngehalten werden. Die sich dadurch ergebende freie Zugänglichkeit der Vorderwand und insbesondere der Seitenwände der Bürstenhülse wird in vorteilhafter Weise dazu benutzt, um anstelle von innerhalb der Bürstenhülse vorgesehener mehrerer Schrauben- bzw. Blattfedern lediglich eine einzige sowohl dem Andruck auf den Kommutator als auch die seitliche Führung in der Bürstenhülse gewährleistende Schenkelfeder ausserhalb der Bürstenhülse zu lagern und in raumsparender Weise lediglich den freien Schenkel dieser Schenkelfeder in die Bürstenhülse zu führen, so dass deren Raum im wesentlichen für eine möglichst lange Kohlebürste zur Verfügung steht. Der erfindungsgemässe Bürstenhalter erlaubt also bei geringem Fertigungs- und Montageaufwand und Gewährleistung langer störungsfreier Betriebszeiten eine hohe Geräuscharmut und Geräuschisolierung trotz kleinster Baugrösse.

Die Erfindung sowie weitere vorteilhafte Ausgestaltungen werden im folgenden anhand schematisch dargestellter Ausführungsbeispiele in der Zeichnung näher erläutert. Darin zeigen:

Fig. 1 eine kommutatorseitige Vorderansicht eines kompletten Bürstenhalters mit im Schnittbild dargestellter Bürstenhülse,

Fig. 2 eine Seitenansicht des Bürstenhalters gemäss Fig. 1,

Fig. 3 eine Draufsicht auf den Bürstenhalter gemäss Fig. 1,

Fig. 4 ein Schnittbild der Bürstentragplatte mit vormontierter Bürstenhülse gemäss Schnittverlauf IV–IV in Fig. 5,

Fig. 5 eine kommutatorseitige Vorderansicht der Bürstentragplatte mit im oberen Teil aufgelegter, jedoch noch nicht mit ihren Laschen festgeklemmter Bürstenhülse,

Fig. 6 ein Schnittbild der Bürstentragplatte mit fertigmontierten und bestückten Bürstenhülsen gemäss Schnittverlauf VI–VI in Fig. 7,

Fig. 7 eine kommutatorseitige Vorderansicht der Bürstentragplatte mit aufgelegten und durch Umbiegen ihrer Laschen festgeklemmten Bürstenhülsen.

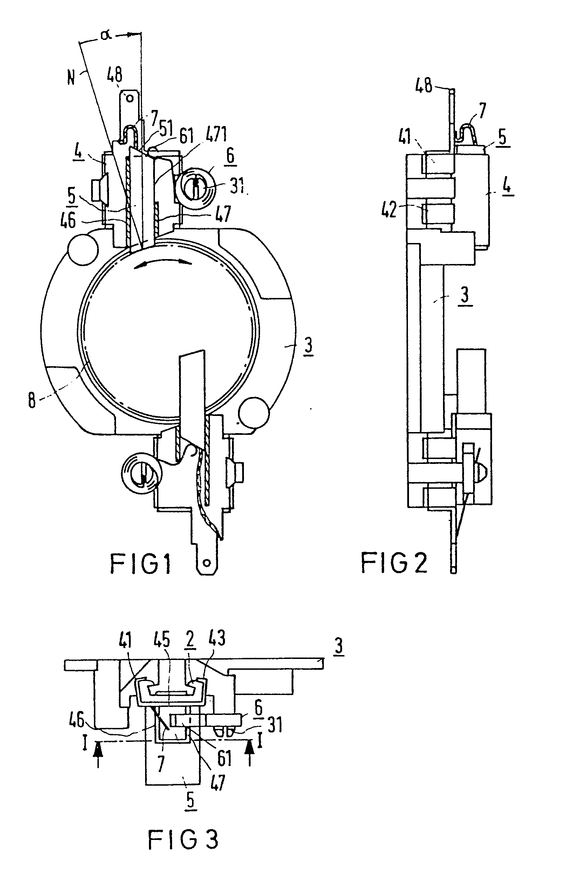

Fig. 1 zeigt die kommutatorseitige Vorderansicht einer Bürstentragplatte 3 mit je einer in der oberen bzw. unteren Hälfte in gleicher Weise ausgebildeten und montierten Bürstenhülse 4 und darin jeweils geführt, gehaltener Kohlebürste 5; zur deutlicheren Darstellung ist jede Bürstenhülse 4 im Schnittbild dargestellt, so dass die beiden Seitenwände 46, 47 der Bürstenhülse 4 im Schnitt und die in der Bürstenhülse 4 geführte Bürste 5 in Draufsicht erscheinen. Wie insbesondere aus Fig. 1 und Fig. 5 bzw. Fig. 7 ersichtlich, sind die beiden Bürstenhülsen 4, von denen eine im oberen und eine im unteren Teil der Bürstentragplatte 3 befestigt ist, gegeneinander parallel mittenversetzt und in einem, von der Normalen N auf die Oberfläche 8 des nur andeutungsweise dargestellten Kommutators abweichenden, Anstellwinkel α an der Bürstentragplatte 3 befestigt. Zur Befestigung der Bürstenhülse 4 an der Bürstentragplatte 3 dienen jeweils an der Rückwand 45 der Bürstenhülse 4 angeformte und um entsprechende Nasen 34, 35 der Bürstentragplatte 3 festklemmbare Laschen 41–44. Radial von der Bürstenhülse 4 abstehend ist an diese einstückig ein Anschlussstift 48 mitangeformt, auf die hier nicht dargestellte, mit einer äusseren Stromzuleitung verbundene Anschlussstecker aufsteckbar sind. An die Anschlussstifte 48 sind mit ihrem einen Ende flexible Stromlitzen 7 angelötet, die mit ihrem anderen Ende mit der Kohlebürste 5 verbunden sind.

Zur dauernden lagestabilen Halterung der Kohlebürste 5 relativ zu den Seitenwänden 46, 47 der Bürstenhülse 4 als auch zum Andruck der Kohlebürste 5 auf die Oberfläche 8 des Kommutators dient als einzige Feder eine Schenkelfeder 6, die mit ihrem aufgerollten Ende an einem an die Bürstentragplatte 3 einstückig angeformten Haltezapfen 31 gelagert ist und mit ihrem freien Schenkel 61 auf einer Kopfschräge 51 der Kohlebürste 5 aufliegt. Die Kopfschräge 51 und der Anstellwinkel α sind derart gewählt, dass unter Berücksichtigung der betriebsmässigen Reibungskraft zwischen der Kohlebürste 5 und der Oberfläche 8 des Kommutators einerseits bzw. der Andruckkraft der Schenkelfeder 6 andererseits die Kohlebürste 5 unabhängig von der Drehrichtung des Kommutators dauernd lagekonstant zu den Seitenwänden 46, 47 der Bürstenhülse 4 angeordnet ist. In Fig. 1 wird z.B. in der oberen Bürstenhülse 4 die Kohlebürste 5 aufgrund der erfindungsgemässen Ausgestaltung und Anordnung durch die Schenkelfeder 6 an die eine Seitenwand 46 der Bürstenhülse 4 angedrückt, selbst wenn der Kommutator sich in solcher Drehrichtung dreht, dass die Reibungskraft zwischen Kommutator und Kohlebürste der Andruckkraft-Tangentialkomponente der Kohlebürste 5 und somit der Andruckkraft der Kohlebürste 5 an die Seitenwand 46 entgegengerichtet ist; erfindungsgemäss verbleibt jedoch ein genügender Restbetrag für die andrückende, die Lagekonstanz der Kohlebürste 5 gewährleistende Tangentialkomponente.

Die Seitenwand 47 der Bürstenhülse 4 ist, wie insbesondere aus Fig. 1 und Fig. 3 ersichtlich, mit einer Längs-Ausnehmung 471 versehen, durch die der betriebsmässig auf der Kopfschräge 51 der Kohlebürste 5 aufliegende bzw. während der Montage des Bürstenhalters zumindest zeitweise gegen die der Längs-Ausnehmung 471 zugewandte Seitenfläche der Kohlebürste 5 andrückende freie Schenkel 61 der Schenkelfeder 6 einführbar ist. In Fig. 1 ist die Kohlebürste 5 in der oberen Bürstenhülse in ihrer Betriebslage zu Beginn der Betriebszeit und in der unteren Bürstenhülse zu Ende der Betriebszeit bei praktisch vollgestreckter Stromlitze 7 dargestellt; im letzteren Fall ist dann selbstverständlich das in Fig. 1 in den Kommutator-Raum ragende Ende der Kohlebürste 5 entsprechend abgeschliffen.

Bei der Montage des Bürstenhalters ist die Bürste 5 zweckmässigerweise in der Bürstenhülse über die eingezeichnete Stellung nach aussen dann soweit herausgehoben, dass der Schenkel 61 der Schenkelfeder 6 gegen die Seitenfläche der Kohlebürste 5 andrückt und dadurch die Kohlebürste in dieser Montagestellung gegen die Seitenfläche 46 reibschlüssig in ihrer herausgeschobenen Position gesichert ist; aufgrund dieser Montagestellung kann die bereits voll bestückte Bürstentragplatte ohne Behinderung durch in den Kommutator-Raum hineinragende Kohlebürsten über den Kommutator geschoben werden.

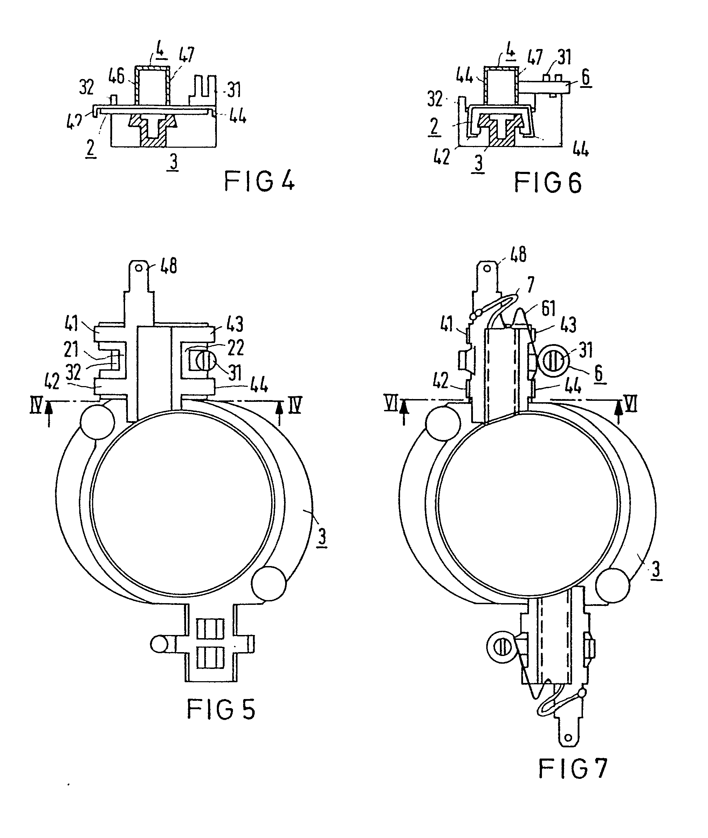

Zwischen der Rückwand 45 der Bürstenhülse 4 und der gegenliegenden Fläche der Bürstentragplatte 3 ist erfindungsgemäss eine Dämpfungsplatte 2 zur Schwingungsentkoppelung zwischen der Bürstenhülse und dem resonanzgebenden Lagerschild vorgesehen. Wie insbesondere aus dem Vormontagezustand gemäss Fig. 4, 5 ersichtlich, ist die aus elastischem Material bestehende Dämpfungsplatte mit einer solchen Übermass-Wulst 21, 22 relativ zum gegenliegenden Teil der festklemmbaren Bürstenhülse 4, insbesondere relativ zu den Laschen 41–44, ausgeschnitten, dass die gegenliegenden Teile der Bürstenhülse 4 nach dem Festklemmen aufgrund des Klemmdrucks von dem elastischen Material wulstartig umgriffen sind.

Wie weiter aus Fig. 4, 5 ersichtlich, ist die Dämpfungsplatte 2 in vorteilhafter Weise vor dem Festklemmen an der Bürstentragplatte 3 mittels an die Bürstentragplatte 3 und/oder die Dämpfungsplatte 2 angeformter Halterungen vorpositionierbar. Im vorliegenden Fall dienen der Vorsprung 32 bzw. der Haltezapfen 31 als an die Bürstentragplatte 3 angeformte Halterungen, um die die entsprechend U-förmig ausgeschnittenen Übermass-Wülste 21, 22 der Dämpfungsplatte 2 im Sinne einer Vorpositionierung formschlüssig gegenlegbar sind. Zur Fertigung und Montage der Bürstenhülse 4 an der Bürstentragplatte 3 wird also gemäss Fig. 4 zunächst die Dämpfungsplatte 2 mittels des Vorsprungs 32 bzw. des Haltezapfens 31 an der Bürstentragplatte 3 vorpositioniert und anschliessend in einem Arbeitsgang die Bürstenhülse 4 auf der Bürstentragplatte 3 unter gleichzeitiger Festpressung der Dämpfungsplatte 2 fixiert. Fig. 6, 7 zeigen die fertig montierte Bürstentragplatte 3 mit der mittels Laschen 41–44 unter Zwischenlage der vorher vorpositionierten Dämpfungsplatte 2 festgeklemmten Bürstenhülse 4.

## Patentansprüche

1. Geräuscharmer Kasten-Bürstenhalter für einen in beiden Drehrichtungen arbeitenden Kommutator-Kleinmotor mit zumindest einer an einer Bürstentragplatte (3) unter Zwischenlage eines entkoppelnden Dämpfungsteils (2) befestigten rahmen- oder kastenartigen Bürstenhülse (4) mit einer darin unter Feder-Druck radial und tangential relativ zu deren Seitenwänden und zur Oberfläche des Kommutatormotors geführten Kohlebürste (5), dadurch gekennzeichnet, dass die Kohlebürste (5) unter den Druck nur einer einzigen, mit ihrem freien Schenkel (61) auf einer Kopfschräge (51) der Kohlebürste (5) aufliegenden Schenkelfeder (6) gestellt und die ansonsten von aussen frei zugängliche Bürstenhülse (4) nur mit ihrer Rückwand (45) unter Zwischenlage einer Dämpfungsplatte (2) über Laschen (41–44) in einem, von der Normalen (N) auf die Oberfläche (8) des Kommutators abweichenden, Anstellwinkel (α) an der Bürstentragplatte (3) befestigt ist, wobei die Kopfschräge (51) und der Anstellwinkel (α) derart gewählt sind, dass unter Berücksichtigung der betriebsmässigen Reibungskraft zwischen der Kohlebürste (5) und der Oberfläche (8) des Kommutators einerseits bzw. der Andruckfeder der Schenkelfeder (6) andererseits die Kohlebürste (5) unabhängig von der Drehrichtung des Kommutators lagekonstant zu den Seitenwänden (46, 47) ihrer Bürstenhülse (4) angeordnet ist.

2. Geräuscharmer Bürstenhalter nach Anspruch 1, dadurch gekennzeichnet, dass die Dämpfungsplatte (2) vor dem Festklemmen der Bürstentragplatte (3) mittels an die Bürstentragplatte (3) und/oder die Dämpfungsplatte (2) angeformter Halterungen vorpositionierbar ist.

3. Geräuscharmer Bürstenhalter nach Anspruch 1 oder 2, dadurch gekennzeichnet, dass die Dämpfungsplatte (2) aus einem elastischen Material besteht und mit einem solchen Übermass (21, 22) relativ zum gegenliegenden Teil der festklemmbaren Bürstenhülse (4), insbesondere relativ zu den Laschen (41–44), ausgeschnitten ist, dass die gegenliegenden Teile der Bürstenhülse (4) nach dem Festklemmen aufgrund des Klemmdrucks von dem elastischen Material wulstartig umgriffen sind.

4. Geräuscharmer Bürstenhalter nach Anspruch 3, dadurch gekennzeichnet, dass die Dämpfungsplatte (2) mit eine Wulstbildung unterstützenden Formgebungen versehen ist.

5. Geräuscharmer Bürstenhalter nach einem der Ansprüche 1 bis 4, dadurch gekennzeichnet, dass eine der beiden frei zugänglichen Seitenwände (47) jeder Bürstenhülse (4) mit einer Längs-Ausnehmung (471) versehen ist, durch die der betriebsmässig auf der Kopfschräge (51) der Kohlebürste (5) aufliegende bzw. während der Montage des Bürstenhalters zumindest zeitweise gegen die der Längs-Ausnehmung (471) zugewandte Seitenfläche der Kohlebürste (5) andrückende freie Schenkel (61) der ausserhalb der Bürstenhülse (4) mit ihrem gerollten Ende an der Bürstentragplatte (3) gelagerten Schenkelfeder (6) einführbar ist.

## Claims

1. A noiseless box-type brush holder for a commutator motor which operates in both directions, comprising at least one frame-like or box-like brush sleeve (4) secured to a brush-supporting plate (3) by an intermediately positioned decoupling damping component (2) with a carbon brush (5) radially and tangentially guided therein relative to its side walls and to the surface of the commutator motor under spring pressure, characterised in that the carbon brush (5) is subjected to pressure by one single side spring (6) having a free face (61) which abuts against an inclined head (51) of the carbon brush (5) and the brush sleeve (4), otherwise freely accessible from the outside, is only secured to the brush-supporting plate (3) at a setting angle (α) differing from the normal (N) to the surface (8) of the commutator by virtue of an interpositioned damping plate (2) with lugs (41–44) at its rear end (45), where the head slant (51) and the setting angle (α) are selected such that the carbon brush (5) is so arranged as to be constant in its position relative to the lateral walls (46, 47) of its brush sleeve (4), independently of the direction of rotation of the commutator, taking into consideration the operational friction force between the carbon brush (5) and the surface (8) of the commutator on the one hand, and the pressure of the side spring (6) on the other hand.

2. A noiseless brush holder as claimed in Claim 1, characterised in that the damping plate (2) is pre-positioned by means of holders attached to the brush-supporting plate (3) and/or the damping plate (2), prior to the clamping of the brush-supporting plate (3).

3. A noiseless brush holder as claimed in Claim 1 or 2, characterised in that the damping plate (2) consists of a clampable elastic material having an excessive size (21, 22) relative to the opposite component of the brush sleeve (4), in particular relative to the lugs (41–44), and that after clamping opposed components of the brush sleeve (4) are surrounded by the elastic material which is now bulbous as a result of the clamping pressure.

4. A noiseless brush holder as claimed in Claim 3, characterised in that the damping plate (2) is provided with pads which favour the bulbous formation.

5. A noiseless brush holder as claimed in one of Claims 1 to 4, characterised in that one of the two freely accessible lateral walls (47) of each brush sleeve (4) is provided with a longitudinal recess (471), through which can be inserted the free face (61) of the side spring (6) which has its rolled end positioned on the brush-supporting plate (3) outside the brush sleeve (4), which free face (61) operationally abuts upon the inclined head (51) of the carbon brush, and during the assembly of the brush holder at least temporarily presses against the lateral surface of the carbon brush (5) which faces towards the longitudinal recess (471).

**Revendications**

1. Porte-balais silencieux en forme de boîte pour un moteur miniature à collecteur travaillant dans les deux sens de rotation, et comportant au moins une douille de logement de balai (4) en forme de cadre ou de boîte, fixée sur une plaque (3) de support des balais, moyennant l'interposition d'un organe d'amortissement (2) réalisant un découplage, et comportant un balai en charbon (5) guidé radialement et tangentiellement, sous l'action de la pression d'un ressort, à l'intérieur de ce logement par rapport aux parois latérales de ce dernier et à la surface du moteur à collecteur, caractérisé par le fait que le balai en charbon (5) est soumis à l'action de la pression d'un seul ressort à branches (6) prenant appui par sa branche libre (61) sur un biseau de tête (51) du balai en charbon (5), et la douille (4) de logement du balai, qui est par ailleurs librement accessible de l'extérieur, est fixée uniquement par sa paroi arrière (45) sur la plaque (3) de support des balais, moyennant le montage intercalé d'une plaque d'amortissement (2) et par l'intermédiaire de pates (41–44), sous un angle de montage (α) s'écartant de la normale (N) à la surface (8) du collecteur, le biseau de tête (51) et l'angle de montage (α) étant choisis de telle sorte que, compte tenu de la force de frottement en cours de fonctionnement entre le balai en charbon (5) et la surface (8) du collecteur, d'une part, et le ressort de pression à branches (6), d'autre part, le balai en charbon (5) est disposé dans une position constante indépendamment du sens de rotation du collecteur, par rapport aux parois latérales (46, 47) de sa douille de logement (4).

2. Porte-balais suivant la revendication 1, caractérise par le fait que la plaque d'amortissement (2) peut être positionnée d'avance, avant le blocage de la plaque (3) de support des balais, à l'aide d'organes de retenue réalisés par façonnage sur la plaque (3) de support des balais et/ou sur la plaque d'amortissement (2).

3. Porte-balais silencieux suivant la revendication 1 ou 2, caractérisé par le fait que la plaque d'amortissement (2) est constituée en un matériau élastique et est découpée de manière à présenter une surcote telle (21, 22), par rapport à la partie opposée de la douille (4) de logement du balai pouvant être fixée par serrage, notamment par rapport aux pattes (41–44), que les parties opposées de la douille (4) de logement du balai sont entourées à la manière d'un bourrelet par le matériau élastique, après la fixation par serrage, en raison de la pression de serrage.

4. Porte-balais silencieux suivant la revendication 3, caractérisé par le fait que la plaque d'amortissement (2) est munie de parties conformées favorisant la formation d'un bourrelet.

5. Porte-balais silencieux suivant l'une des revendications 1 à 4, caractérisé par le fait que l'une des deux parois latérales (4), librement accessibles, de chaque douille de logement de balais (4) est munie d'un évidement longitudinal dans lequel peut être introduite la branche libre (61), qui s'applique en cours de fonctionnement sur le biseau de tête (51) du balai en charbon (5) ou est repoussée, au moins par instants, pendant le montage du porte-balais, contre la surface latérale du balai en charbon (5) tournée vers l'évidement longitudinal (471), du ressort à branches (6) monté par son extrémité enroulée sur la plaque (3) de support des balais, à l'extérieur de la douille (4) de logement des balais.

FIG 1

FIG 2

FIG 3

FIG 4

FIG 6

FIG 5

FIG 7